# EUROPÄISCHE PATENTSCHRIFT

(11) **EP 0 947 725 B1**
(45) Veröffentlichungstag und Bekanntmachung des Hinweises auf die Patenterteilung: **12.04.2006**
(21) Anmeldenummer: 99106061.7
(22) Anmeldetag: 25.03.1999
(51) Int. Cl.: F16D 66/02, F16D 59/02, F16D 55/28

(54) **Verfahren zum Überwachen des Verschleisses eines Bremsbelages bei Bremsmotoren**
Method for monitoring the wear of the brake pad of a brake motor
Méthode de surveillance de l'usure d'un patin de moteur à frein

(30) Priorität: 30.03.1998 DE 19814042
(43) Veröffentlichungstag der Anmeldung: 06.10.1999
(73) Patentinhaber: Sew-Eurodrive GmbH & Co. KG, 76646 Bruchsal (DE)
(72) Erfinder: Tüngler, Eberhard, Dr., 76646 Bruchsal (DE)
(74) Vertreter: Bohnenberger, Johannes

(56) Entgegenhaltungen:
- EP-A- 0 339 759
- DE-A- 3 739 836
- DE-A- 19 548 520
- US-A- 5 302 894

## Beschreibung

Die Erfindung betrifft ein Verfahren zum Überwachen des Verschleißes eines Bremsbelages bei Bremsmotoren mit einer Bremsspule, einer Sensorspule mit einem ersten Spulenkern und einer elektronischen Schaltung, an der die Sensorspule angeschlossen ist, wobei die Induktivität der ersten Sensorspule messtechnisch erfasst wird und von der Position einer Ankerscheibe abhängt sowie eine elektromagnetisch betätigbare Bremse.

Ein Bremsmotor als solcher ist in Meyers Lexikon der Technik und der exakten Naturwissenschaft, 1. Band, A-E, Mannheim u.a. Bibliographisches Institut 1969, Seite 411, beschrieben.

Bremsmotoren sind Motoren, an denen eine Bremsspule anmontiert ist, deren Magnetkreis über den Spulenträger der Bremsspule, einen Luftspalt und die Ankerplatte läuft, wobei der Rotor des Motors verbunden ist mit einem Belagträger, der den Bremsbelag trägt, und beim Bremsen die Bremsspule so wenig oder gar nicht bestromt wird, daß die Ankerplatte von Federn auf den Bremsbelag des Bremsbelagträgers gedrückt wird und die Bremswirkung eintritt.

Beim Bremsen wird die Ankerscheibe von Federn mit dem Bremsbelag des Bremsbelagträgers in Kontakt gebracht; dabei ist die Bremsspule mit keinem oder einem kleinen Strom beaufschlagt. Beim Starten des Motors wird die Bremse gelüftet; d.h. die Bremsspule wird mit Strom beaufschlagt, der so groß ist, daß die Magnetkraft die Federkraft übersteigt.

Aus DE 196 26 669 ist ein Verfahren bekannt, das den Verschleiß des Bremsbelages mittels der Detektion von Körperschall überwacht. Dieses Verfahren ist aufwendig und kostenintensiv, da eine aufwendige elektronische Auswerteschaltung verwendet werden muss.

Aus DE 41 06 897 und DE 40 31 245 sind Verfahren bekannt, die einen mechanischen Schalter benutzen, um bei zu großem Verschleiß des Bremsbelags ein Warnsignal auszugeben oder den Motor auszuschalten. Dieser mechanische Schalter ist ein Verschleißteil und daher keine optimale Lösung des Problems der Verschleißerkennung.

Aus der DE 37 39 836 C2 ist bekannt, die Spule eines Bremsmotors in die Erfassung des Verschleißes von Bremsbelägen einzubeziehen.

In der DE 195 48 520 A wird ein Verfahren zum Ermitteln der Luftspaltdicke einer durch einen Elektromagneten betätigbaren Kupplung, insbesondere einer Bremse, vorgestellt, bei der ein von der Luftspaltdicke abhängiges elektrisches Signal des Elektromagneten gemessen und weiterverarbeitet wird. Dabei wird mindestens eine Spule des Elektromagneten mit einer sich periodisch ändernden Spannung beaufschlagt. Als Größe für die Luftspaltdicke wird die Amplitude eines sich periodisch ändernden Anteils des die Spule durchfließenden Stroms ermittelt. Nachteilig bei diesem Verfahren ist, daß der thermische Zustand bei der Messung nicht berücksichtigt wird, was zu falschen Messwerten führen kann.

Die US 5 302 894 A beschreibt ein berührungslos arbeitendes Wegmeßsystem mit einem Sensorgehäuse, einer im Sensorgehäuse angeordneten Spule und einer die Spule fixierenden Einbettmasse sowie mit einer Versorgungs-/Auswerteelektronik. Das Wegmeßsystem ist so ausgeführt, daß der Einfluss von Flüssigkeiten oder Festkörpern mit hoher Dielektrizitätszahl auf die Meßwerte weitgehend eliminiert ist. Dazu ist auf der Meßseite des Sensors eine Abschirmung vorgesehen, die einerseits für von der Spule ausgehende elektrische Feldlinien zumindest weitgehend undurchlässig, jedoch für von der Spule ausgehende magnetische Feldlinien weitgehend durchlässig ist. Eine weitere Spule, beispielsweise eine Referenz-Spule zur Temperaturkompensation, kann innerhalb des Sensorgehäuses angeordnet werden, allerdings bleibt unklar, wie dies geschehen soll.

Bei zunehmendem Verschleiß des Bremsbelages ändert sich die Entfernung der Ankerscheibe von der Bremsspule im gelüfteten Betrieb und im Bremsbetrieb.

Bei dieser Änderung der Entfernung der Ankerscheibe von der Bremsspule ändert sich die Induktivität der Bremsspule. Weitere Beeinflussungen der Induktivität können durch thermische Schwankungen bedingt sein. Falls beispielsweise die Bremse lange Zeit gelüftet war und der Motor mit einem konstanten Drehmoment betrieben wurde, ist der Spulenträger der Bremsspule warm. Falls hingegen die Betriebsart ein ständiges Anfahren und Bremsen des Motors war, ist der Spulenträger der Bremsspule weniger warm. Falls der Bremsmotor längere Zeit ausgeschaltet war, nimmt er Umgebungstemperatur an. Daher können also die Temperaturen des Spulenträgers und der Ankerscheibe schwanken im üblichen zugelassenen Bereich von beispielsweise -20° C bis 100°C.

Der Erfindung liegt die Aufgabe zu Grunde, bei einem Elektromotor mit Bremse die Entfernung eines Spulenkörpers zu einer Ankerscheibe als Maß für den Verschleiß des Bremsbelages zuverlässig und unabhängig von thermischen Schwankungen des Bremsmotors zu messen.

Diese Aufgabe wird durch ein Verfahren zum Überwachen des Verschleißes eines Bremsbelages bei Bremsmotoren nach Patentanspruch 1 sowie durch eine elektromagnetisch betätigbare Bremse nach Patentanspruch 10 gelöst.

Insbesondere wird die Aufgabe durch ein Verfahren zum Überwachen des Verschleißes eines Bremsbelages bei Bremsmotoren mit einer Bremsspule, einer ersten Sensorspule mit einem ersten Spulenkern und einer elektronischen Schaltung, an der die erste Sensorspule angeschlossen ist, gelöst. Die Induktivität der ersten Sensorspule wird messtechnisch erfasst und hängt von der Position einer Ankerscheibe ab. Es wird eine zweite Sensorspule mit einem zweiten Spulenkern, deren Induktivität unabhängig ist von der Position der Ankerscheibe, so ausgerichtet, dass die Magnetfeldlinien der zweiten Sensorspule hauptsächlich innerhalb des zweiten Spulenkerns verlaufen, wobei der erste und der zweite Spulenkern thermisch gekoppelt sind, die zweite Sensorspule an der elektronischen Schaltung angeschlossen ist, die Induktivität der zweiten Sensorspule messtechnisch erfasst wird und wobei aus der Änderung der Induktivitäten der beiden Sensorspulen auf den Verschleiß des Bremsbelages geschlossen wird. Ferner wird die Aufgabe durch eine elektromagnetisch betätigbare Bremse gelöst.

Erfindungsgemäß werden die Induktivitäten der Spulen vermessen und daraus mit Hilfe der elektronischen Schaltung ein Maß für den Verschleiß bestimmt.

Die Bestimmung des Maßes für den Verschleiß erfolgt im Bremsbetrieb. Im Bremsbetrieb ist die Bremsspule stromlos oder nur mit einem sehr kleinen Strom so beaufschlagt, daß die Magnetkraft kleiner als die mechanische Kraft der Federn ist. Daher wird die Ankerscheibe gegen den Bremsbelagträger mit Bremsbelag gedrückt. Ohne Verschleiß des Bremsbelages befindet sich nun die Ankerscheibe in einem gewissen Abstand vom Spulenträger. Mit Verschleiß des Bremsbelages ändert sich der Abstand der Ankerscheibe vom Spulenträger. Daher ändern sich auch die Induktivitäten der Bremsspule und der ersten Sensorspule. Die Induktivität der zweiten Sensorspule hingegen ändert sich nicht oder nur äußerst gering, da sie gemäß Anspruch 3 entsprechend montiert ist. Dies wird beispielhaft dadurch erreicht, daß diese zweite Sensorspule tief in den Spulenträger eingesetzt wird und in ihrer räumlichen Orientierung senkrecht zur Bremsspule montiert wird.

Dadurch verläuft der größte Teil des Magnetfeldes im Spulenträger.

Erfindungsgemäß kann die Bremsspule dieselbe Spule wie die Sensorspule sein. In diesem Fall wird die Verbindung zur elektronischen Schaltung geeignet gewählt. Die Wechselspannung kann über Kondensatoren in die Bremsspule eingekoppelt werden.

Die elektronische Schaltung setzt dann die relative Änderung der Induktivitäten der Sensorspulen bei Änderung des Abstandes der Ankerplatte, also Zunahme des Verschleißes, in ein elektrisches analoges oder digitales Signal um. Dieses kann zur Ansteuerung einer optischen oder akustischen Anzeigevorrichtung verwendet werden.

Die Induktivität der zweiten Sensorspule ist hauptsächlich bestimmt durch die Permeabilität des Spulenträgers, die eine starke Temperaturabhängigkeit aufweisen kann. Die Induktivität der ersten Sensorspule oder der Bremsspule ist zusätzlich bestimmt durch die Permeabilität der Ankerscheibe und deren Entfernung. Je nach Betriebsart und Belastung des Bremsmotors und bei verschiedenen Umgebungstemperaturen variiert die Temperatur des Spulenkörpers zwischen -20 °C und 100 °C. Daher ist eine Änderung der niederfrequenten Induktivität nicht eindeutig rückführbar auf den Abstand der Ankerscheibe zum Spulenträger. Die elektronische Schaltung berücksichtigt jedoch die Induktivität der zweiten Sensorspule. Diese hängt nicht ab vom Abstand der Ankerscheibe zum Spulenträger. Da die Geometrie des Spulenträgers konstant ist, ist sie nur abhängig von der Temperatur. Auf diese Weise steuert die elektronische Schaltung die Temperaturabhängigkeit der Induktivität der ersten Spule heraus.

Das am Ausgang der elektronischen Schaltung ankommende Signal kann nun entweder digital oder analog zur Verfügung gestellt werden.

Es kann auch zur Ansteuerung einer Anzeigevorrichtung, die den Verschleiß des Bremsbelages anzeigt, verwendet werden. Diese Anzeige kann analog, digital, optisch oder akustisch erfolgen, beispielsweise mit einer roten Warnlampe, die angesteuert wird, falls der Verschleiß und damit der Abstand der Ankerscheibe vom Spulenträger einen kritischen Wert übersteigt.

Zusätzlich kann man durch Erhöhen der Frequenz, die in der elektronischen Schaltung erzeugt wird und in die Bremsspule und die zweite Spule eingebracht wird, die thermische Abhängigkeit vermindern, da der Wechselanteil der magnetischen Permeabilität kleiner ist als der statische und vom Betrag her geringer.

Im folgenden wird nun die beiliegende Abbildung erläutert, die ein Ausführungsbeispiel der Erfindung zeigt.

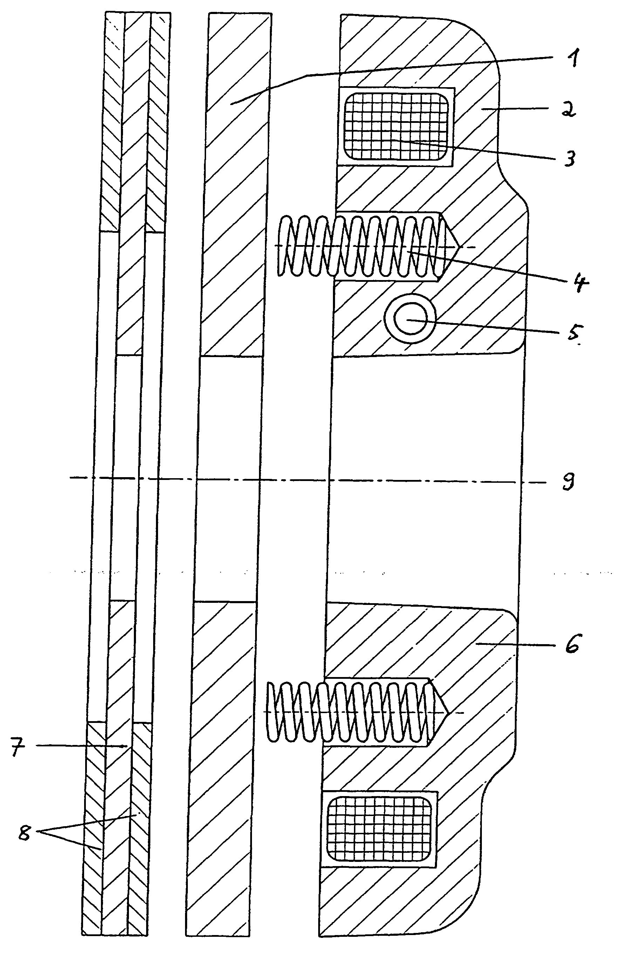

In Fig. 1 ist ein Querschnitt durch die Bremse gezeichnet. Die Bremsspule 3 liegt in ihrem Spulenkörper 2, 6 eingebettet. Die Ankerscheibe 1 wird von der Bremsspule 3 angezogen, wenn der Strom solchen Wert übersteigt, daß die Magnetkraft die Federkraft der Federn 4 übersteigt. Falls die Bremsspule 3 stromlos ist, drücken die Federn 4 die Ankerscheibe 1 gegen den Belagträger 7 mit den Bremsbelägen 8.

Die Rotorachse 9 stellt gleichzeitig die Symmetrieachs der Bremsspule 3 dar. In Fig.1 ist die erste Sensorspule 3 dieselbe Spule wie die Bremsspule 3. Die zweite Sensorspule 5 ist senkrecht zur ersten Sensorspule 3 angeordnet und liegt möglichst tief im Spulenträger 2, damit die Änderung des Abstandes der Ankerscheibe 1 ihre Induktivität nicht beeinflußt; sie liegt jedoch noch in der Nähe der ersten Sensorspule 3, damit die Spulenkörper ein möglichst gleiches Temperaturniveau haben. Die beiden Spulenkörper 2 der Spulen 3 und 5 sind thermisch gut gekoppelt als ein Spulenkörper 2 aus einem Material ausgeführt.

## Patentansprüche

1. Verfahren zum Überwachen des Verschleißes eines Bremsbelages (8) bei Bremsmotoren mit einer Bremsspule (3), einer ersten Sensorspule (3) mit einem ersten Spulenkern (2) und einer elektronischen Schaltung, an der die erste Sensorspule (3) angeschlossen ist, wobei die Induktivität der ersten Sensorspule (3) messtechnisch erfaßt wird und von der Position einer Ankerscheibe (1) abhängt,
**dadurch gekennzeichnet, daß**
eine zweite Sensorspule (5) mit einem zweiten Spulenkern (2), deren Induktivität unabhängig ist von der Position der Ankerscheibe (1), so ausgerichtet wird, daß die Magnetfeldlinien der zweiten Sensorspule (5) hauptsächlich innerhalb des zweiten Spulenkerns (2) verlaufen, wobei der erste und der zweite Spulenkern (2) thermisch gekoppelt sind,
die zweite Sensorspule (5) an der elektronischen Schaltung angeschlossen ist,
die Induktivität der zweiten Sensorspule (5) messtechnisch erfaßt wird und
daß aus der Änderung der Induktivitäten der beiden Sensorspulen (3, 5) auf den Verschleiß des Bremsbelages (8) geschlossen wird.

2. Verfahren nach Anspruch 1,
**dadurch gekennzeichnet, daß**
die erste Sensorspule räumlich orientiert ist wie die Bremsspule (3).

3. Verfahren nach Anspruch 1,
**dadurch gekennzeichnet, daß**
die zweite Sensorspule (5) in ihrer räumlichen Lage senkrecht zur Orientierung der Bremsspule (3) ausgerichtet ist.

4. Verfahren nach mindestens einem der vorangegangenen Ansprüche,
**dadurch gekennzeichnet, daß**
als Spulenkern (2) der beiden Sensorspulen (3, 5) der gleiche benutzt wird.

5. Verfahren nach mindestens einem der vorangegangenen Ansprüche,
**dadurch gekennzeichnet, daß**
die Bremsspule (3) dieselbe Spule wie die erste Sensorspule (3) ist, wobei die Bremsspule (3) in geeigneter Weise an die elektronische Schaltung angeschlossen ist, bestromt, gesteuert oder geregelt wird.

6. Verfahren nach mindestens einem der vorangegangenen Ansprüche,
**dadurch gekennzeichnet, daß**
die Sensorspulen (3, 5) von der elektronischen Schaltung mit Wechselstrom beaufschlagt werden.

7. Verfahren nach mindestens einem der vorangegangenen Ansprüche,
**dadurch gekennzeichnet, daß**
die Sensorspulen (3, 5) von der elektronischen Schaltung mit gegenüber der Netzfrequenz von 50 Hz höherfrequentem Wechselstrom beaufschlagt werden.

8. Verfahren nach mindestens einem der vorangegangenen Ansprüche,
**dadurch gekennzeichnet, daß**
die Sensorspulen (3, 5) zusammen bezüglich des Wechselstromes in Reihe geschaltet werden und diese Reihenschaltung mit der elektronischen Schaltung verbunden wird.

9. Verfahren nach mindestens einem der vorangegangenen Ansprüche,
**dadurch gekennzeichnet, daß**
die elektronische Schaltung eine optische oder akustische Anzeigevorrichtung ansteuert, die den Verschleißzustand anzeigt oder bei Überschreiten eines kritischen Wertes des Verschleißes eine optische oder akustische Warnmeldung durchführt.

10. Elektromagnetisch betätigbare Bremse für Elektromotor, die eine Bremsspule, eine erste Sensorspule (3) mit einem ersten Spulenkern (2) und eine elektronische Schaltung umfaßt, an der die Sensorspule (3) angeschlossen ist, wobei die elektronische Schaltung derart ausgebildet ist, daß die Induktivität der Sensorspule (3) messtechnisch erfaßt wird, die von der Position einer Ankerscheibe (1) abhängt,
**dadurch gekennzeichnet, daß**
die Bremse ferner eine zweite Sensorspule (3), deren Induktivität weitgehend unabhängig von der Position der Ankerscheibe (1) ist, mit einem zweiten Spulenkern (2) umfaßt, die so ausgerichtet ist, daß die Magnetfeldlinien im wesentlichen innerhalb des zweiten Spulenkerns (2) verlaufen, wobei
die beiden Spulenkerne (2) der ersten und zweiten Sensorspule (3) thermisch gekoppelt sind, und
die zweite Sensorspule (3) an der elektronischen Schaltung angeschlossen ist, die derart ausgebildet ist, daß die Induktivität der zweiten Sensorspule (3) meßtechnisch erfaßt wird,
so daß aus der Änderung der Induktivitäten der Sensorspulen (3) auf den Verschleiß des Bremsbelages (8) geschlossen wird.

11. Bremse nach Anspruch 10,
**dadurch gekennzeichnet, daß**
die erste Sensorspule räumlich orientiert ist wie die Bremsspule (3).

12. Bremse nach Anspruch 10,
**dadurch gekennzeichnet, daß**
die zweite Sensorspule (5) in ihrer räumlichen Lage senkrecht zur Orientierung der Bremsspule (3) ausgerichtet ist.

13. Bremse nach einem der Ansprüche 10 bis 12,
**dadurch gekennzeichnet, daß**
als Spulenkern (2) der beiden Sensorspulen (3, 5) der gleiche benutzt wird.

14. Bremse nach einem der Ansprüche 10 bis 13,
**dadurch gekennzeichnet, daß**
die Bremsspule (3) dieselbe Spule wie die erste Sensorspule (3) ist, wobei die Bremsspule (3) in geeigneter Weise an die elektronische Schaltung angeschlossen ist, bestromt, gesteuert oder geregelt wird.

15. Bremse nach einem der Ansprüche 10 bis 14,
**dadurch gekennzeichnet, daß**
die Sensorspulen (3, 5) derart ausgebildet sind, daß sie von der elektronischen Schaltung mit Wechselstrom beaufschlagt werden.

16. Bremse nach einem der Ansprüche 10 bis 15,
**dadurch gekennzeichnet, daß**
die Sensorspulen (3, 5) derart ausgebildet sind, daß sie von der elektronischen Schaltung mit gegenüber der Netzfrequenz von 50 Hz höherfrequentem Wechselstrom beaufschlagt werden.

17. Bremse nach einem der Ansprüche 10 bis 16,
**dadurch gekennzeichnet, daß**
die Sensorspulen (3, 5) zusammen bezüglich des Wechselstromes in Reihe geschaltet werden und diese Reihenschaltung mit der elektronischen Schaltung verbunden wird.

18. Bremse nach einem der Ansprüche 10 bis 17,
**dadurch gekennzeichnet, daß**
die elektronische Schaltung eine optische oder akustische Anzeigevorrichtung ansteuert, die den Verschleißzustand anzeigt oder bei Überschreiten eines kritischen Wertes des Verschleißes eine optische oder akustische Warnmeldung durchführt

## Claims

1. A method of monitoring the wear of a brake lining (8) in brake motors with a braking coil (3), a first sensor coil (3) with a first coil core (2) and an electronic circuit, to which the first sensor coil (3) is connected, wherein the inductance of the first sensor coil (3) is determined by measuring technology and is dependent on the position of an armature plate (1), **characterised in that**
a second sensor coil (5) with a second coil core (2), the inductance of which is independent of the position of the armature plate (1), is so aligned that the magnetic field lines of the second sensor coil (5) extend principally inside the second coil core (2), wherein the first and the second coil core (2) are thermally coupled,
the second sensor coil (5) is connected to the electronic circuit,
the inductance of the second sensor coil (5) is determined by measuring technology and
**in that** the wear of the brake lining (8) is indicated by the variation in the inductances of the two sensor coils (3,5).

2. A method according to Claim 1, **characterised in that** the first sensor coil is spatially orientated in the same way as the brake coil (3).

3. A method to Claim 1, **characterised in that** in its spatial position the second sensor coil (5) is aligned perpendicularly to the orientation of the brake coil (3).

4. A method according to any one of the preceding Claims, **characterised in that** the same coil is used as the core (2) of the two sensor coils (3,5).

5. A method according to any one of the preceding Claims, **characterised in that** the brake coil (3) is the same coil as the first sensor coil (3), the brake coil (3) being suitably energised, controlled or regulated and connected to the electronic circuit.

6. A method according to any one of the preceding Claims, **characterised in that** the sensor coils (3,5) are acted upon with alternating current by the electronic circuit.

7. A method according to any one of the preceding Claims, **characterised in that** the sensor coils (3,5) are acted upon by the electronic circuit with alternating current which is of higher frequency than the mains frequency of 50 Hz.

8. A method according to any one of the preceding Claims, **characterised in that** the sensor coils (3,5) are connected in series together in respect of the alternating current and this series connection is connected to the electronic circuit.

9. A method according to any one of the preceding Claims, **characterised in that** the electronic circuit activates a visual or acoustic indicator which indicates the wearing condition or provides a visual or acoustic warning when the wear exceeds a critical value.

10. An electromagnetically actuatable brake for an electric motor, which comprises a braking coil, a first sensor coil (3) with a first coil core (2) and an electronic circuit, to which the first sensor coil (3) is connected, wherein the electronic circuit is so designed that the inductance of the sensor coil (3) is determined by measuring technology, which is dependent on the position of the armature plate (1),
**characterised in that**
the brake further comprises a second sensor coil (3), the inductance of which is independent of the position of the armature plate (1), with a second coil core (2) which is so aligned that the magnetic field lines extend substantially inside the second coil core (2), wherein
the two coil cores (2) of the first and second sensor coil (2) are thermally coupled, and
the second sensor coil (3) is connected to the electronic circuit which is so designed that the inductance of the second sensor coil (3) is determined by measuring technology,
so that the wear of the brake lining (8) is indicated by the variation in the inductances of the sensor coils (3).

11. A brake according to Claim 10, **characterised in that** the first sensor coil is spatially orientated in the same way as the brake coil (3).

12. A brake according to Claim 10, **characterised in that** in its spatial position the second sensor coil (5) is aligned perpendicularly to the orientation of the brake coil (3).

13. A brake according to any one of Claims 10 to 12, **characterised in that** the same coil is used as the coil core (2) of the two sensor coils (3,5).

14. A brake according to any one of Claims 10 to 13, **characterised in that** the brake coil (3) is the same coil as the first sensor coil (3), the brake coil (3) being suitably energised, controlled or regulated and connected to the electronic circuit.

15. A brake according to any one of Claims 10 to 14, **characterised in that** the sensor coils (3,5) are acted upon with alternating current by the electronic circuit.

16. A brake according to any one of Claims 10 to 15, **characterised in that** the sensor coils (3,5) are so designed that they are acted upon by the electronic circuit with alternating current which is of higher frequency than the mains frequency of 50 Hz.

17. A brake according to any one of Claims 10 to 16, **characterised in that** the sensor coils (3,5) are connected in series together in respect of the alternating current and this series connection is connected to the electronic circuit.

18. A brake according to any one of Claims 10 to 17, **characterised in that** the electronic circuit activates a visual or acoustic indicator which indicates the wearing condition or provides a visual or acoustic warning when the wear exceeds a critical value.

## Revendications

1. Procédé de surveillance de l'usure d'une garniture de frein (8) de moteurs-freins ayant une bobine de frein (3), une première bobine de détecteur (3) comprenant un premier noyau de bobine (2) et un circuit électronique auquel est reliée la première bobine de détecteur (3), l'inductance de la première bobine de détecteur (3) étant lue selon des méthodes de mesure et étant dépendante de la position d'un disque d'induit (1), **caractérisé en ce**
**qu'**une deuxième bobine de détecteur (5) est prévue, comprenant un deuxième noyau de bobine (2), dont l'inductance est indépendante de la position du disque d'induit (1), qui est orientée de manière telle que les lignes de champ magnétique de la deuxième bobine de détecteur (5) passent principalement à l'intérieur du deuxième noyau de bobine (2), les premier et deuxième noyaux de bobine (2) étant thermiquement couplés,
**que** la deuxième bobine de détecteur (5) est reliée au circuit électronique,
**que** l'inductance de la deuxième bobine de détecteur est lue selon des méthodes de mesure, et
**qu'**une déduction quant à l'usure de la garniture de frein (8) est faite à partir de la variation des inductances des deux bobines de détecteur (3, 5).

2. Procédé selon la revendication 1, **caractérisé en ce que** la première bobine de détecteur est orientée dans l'espace de la même manière que la bobine de frein (3).

3. Procédé selon la revendication 1, **caractérisé en ce que** la deuxième bobine de détecteur (5) est orientée dans l'espace perpendiculairement à l'orientation de la bobine de frein (3).

4. Procédé selon l'une au moins des revendications précédentes, **caractérisé en ce qu'**on utilise le même noyau de bobine (2) pour les deux bobines de détecteur (3, 5).

5. Procédé selon l'une au moins des revendications précédentes, **caractérisé en ce que** la bobine de frein (3) est la même bobine que la première bobine de détecteur (3), la bobine de frein (3) étant reliée de façon appropriée au circuit électronique et est mise sous tension, commandée et régulée de façon appropriée.

6. Procédé selon l'une au moins des revendications précédentes, **caractérisé en ce que** les bobines de détecteur (3, 5) sont mises sous tension en courant alternatif par le circuit électronique.

7. Procédé selon l'une au moins des revendications précédentes, **caractérisé en ce que** les bobines de détecteur (3, 5) sont mises sous tension, par le circuit électronique, en un courant alternatif ayant une fréquence supérieure à la fréquence de 50 Hz du réseau.

8. Procédé selon l'une au moins des revendications précédentes, **caractérisé en ce que** les bobines de détecteur (3, 5) sont branchées en série dans le circuit de courant alternatif, et que ce circuit en série est relié au circuit électronique.

9. Procédé selon l'une au moins des revendications précédentes, **caractérisé en ce que** le circuit électronique commande un dispositif indicateur optique ou sonore qui indique l'état d'usure ou qui, en cas de dépassement d'une valeur critique de l'usure, effectue une alerte optique ou sonore.

10. Frein à commande électromagnétique pour un moteur électrique, comprenant une première bobine de détecteur (3) ayant un noyau de bobine (2) et un circuit électronique auquel est reliée la bobine de détecteur (3), le circuit électronique étant configuré de manière telle que l'inductance de la bobine de détecteur (3) qui est dépendante de la position d'un disque d'induit (1) soit lue selon des méthodes de mesure,
**caractérisé en ce que**
le frein comporte en outre une deuxième bobine de détecteur (3) dont l'inductance est en grande partie indépendante de la position du disque de détecteur (1), et qui comprend un deuxième noyau de bobine et est orientée de manière telle que les lignes de champ magnétique passent essentiellement à l'intérieur du deuxième noyau de bobine (2),
les deux noyaux de bobine (2) des première et deuxième bobines de détecteur (3) étant thermiquement couplés, et
la deuxième bobine de noyau (3) est reliée au circuit électronique qui est configuré de manière telle que l'inductance de la deuxième bobine de détecteur (3) soit lue selon des méthodes de mesure,
de telle sorte qu'une déduction quant à l'usure de la garniture de frein (8) puisse être faite à partir de la variation des inductances des bobines de détecteur (3).

11. Frein selon la revendication 10, **caractérisé en ce que** la première bobine de détecteur a la même orientation spatiale que la bobine de frein (3).

12. Frein selon la revendication 10, **caractérisé en ce que** la deuxième bobine de détecteur (5) est orientée dans l'espace perpendiculairement à l'orientation de la bobine de frein (3).

13. Frein selon l'une des revendications 10 à 12, **caractérisé en ce que** le noyau de bobine (2) qui est utilisé pour les deux bobines de détecteur (3, 5) est le même.

14. Frein selon l'une des revendications 10 à 13, **caractérisé en ce que** la bobine de frein (3) est la même bobine que la première bobine de détecteur (3), la bobine de frein (3) étant reliée de manière appropriée au circuit électronique et alimentée, commandée ou réglée de façon appropriée.

15. Frein selon l'une des revendications 10 à 14, **caractérisé en ce que** les bobines de détecteur (3, 5) sont configurées de manière telle qu'elles soient alimentées en un courant alternatif par le circuit électronique.

16. Frein selon l'une des revendications 10 à 15, **caractérisé en ce que** les bobines de détecteur (3, 5) sont configurées de manière telle qu'elles soient alimentées par le circuit électronique en un courant alternatif dont la fréquence est supérieure à la fréquence de 50 Hz du réseau.

17. Frein selon l'une des revendications 10 à 16, **caractérisé en ce que** les bobines de détecteur (3, 5) sont branchées conjointement en série dans le circuit de courant alternatif, et que ce circuit en série est relié au circuit électronique.

18. Frein selon l'une des revendications 10 à 17, **caractérisé en ce que** le circuit électronique commande un dispositif indicateur optique ou sonore qui indique l'état d'usure ou effectue une alerte optique ou sonore en cas de dépassement d'une valeur critique de l'usure.
